# EUROPEAN PATENT APPLICATION

(11) **EP 4 382 498 A1**
(43) Date of publication of application: **12.06.2024**
(21) Application number: 22212677.3
(22) Date of filing: 09.12.2022
(51) Int. Cl.: C04B 14/06, C01B 33/158, C01B 33/159

(54) **BINDER-FREE BULK SILICA AEROGEL MATERIAL, METHOD OF PRODUCING THE SAME AND USES THEREOF**

(71) Applicant: EMPA Eidgenössische Materialprüfungs- und Forschungsanstalt, 8600 Dübendorf (CH)
(72) Inventor: The designation of the inventor has not yet been filed
(74) Representative: Schmauder & Partner AG Patent- & Markenanwälte VSP

(57) **Abstract**

A method of preparing a binder-free bulk silica aerogel material, comprising the steps of: (i) providing an amount of granular silica aerogel material, and (ii) carrying out a curing step wherein the granular silica aerogel material is contacted with a curing medium, thereby converting the granular silica aerogel material to the bulk silica aerogel material. According to the invention, the granular silica aerogel material is hydrophobic, and the curing medium is an aqueous curing medium which is either acidic with a pH < 4 or basic with a pH > 10. A resulting binder-free bulk silica aerogel material comprises silica aerogel granules which are interface-bonded and has the following properties: a thermal conductivity below 24 mW/(m·K), a compressive strength of at least 5 kPa, a 3-point flexural stress (σf), determined with a specimen having a longest dimension which is four times the specimen thickness, of at least 0.5 kPa.

## Description

### Field of the Invention

The invention generally relates to a binder-free bulk silica aerogel material, to a method for producing such a material, and to uses thereof.

### Background of the Invention

Objects made from silica aerogel have several advantageous properties including, in particular, a low thermal conductivity.

Silica aerogel is typically produced in the form of blankets (impregnated in fibre mat), granulate (with grain size in the mm range) or powders (with grain size in the micrometre to tens of micrometre range). Particularly granulate and powders must be processed further to create a usable product. One option is the inclusion of granulate in building material such as a render (e.g., mixture of gypsum and lime with aerogel granulate). Another existing solution is in the form of glued granulate boards or form parts. Here, (hydrophobic) silica aerogel granulate, often with broad grain size distribution to improve the space filling factor, is mixed with a binder that is allowed to cure or harden inside a mould to produce a cohesive aerogel board or form part (replicate). Numerous types of inorganic (cement, gypsum, lime, waterglass, silica sol) and organic binders (styrene-butyl acrylate, polyurethane, epoxy, bismaleimide, silicone rubber, acrylate-vinyl acetate-ethylene, acrylic) have been proposed (DE 102011119029 B4, US 5656195 A, EP 0489319 A2, US 5294480 A, US 4221672 A, EP 0269101 A2, US 5948314 A, US 6481649 B1, US 7468205 B2, US 6620355 B1, WO 2003064025 A1, EP 1207081 A2, CN 100594197, US 20080241490 A1, US 9115025 B2, US 20120094036 A1, EP 0027633 A1). For all of these documents, the inclusion of a binder is key to form a cohesive bond needed to create a board or form part with satisfactory mechanical properties. In fact, US 7468205 B2 explicitly states *"An aerogel particle content significantly above 97 vol.* % *would lead to a binder content of less than 3 vol.* %. *In that case, this proportion would be too low to ensure an adequate connection of the aerogel particles with each other,* as *well* as *mechanical compressive and bending strengths."* The inclusion of a binder however has several negative consequences: increased flammability (particularly with organic glue type binders), increased thermal conductivity, cost of the binder, increased humidity uptake.

There has also been some work on binder-free aerogel composites: US 2811457 A discloses a binder-free aerogel-asbestos composite obtained after adding moisture and sintering between 315 and 870°C. The drawbacks are the use of asbestos fibres, the high sintering temperatures and the use of non-hydrophobised rather than hydrophobised silica aerogel granulate. EP 1988228 A3 discusses binder-free production of cohesive boards from pyrogenic silica or silica aerogel and include the addition of a hydrophobisation agent during pressing because the starting silica (pyrogenic or aerogel) is hydrophilic. A different, but related material to silica aerogel is fumed silica for which binder-free production of composites is relatively straightforward, but also here the fumed silica is non-hydrophobised (DE 102010046684 A1, EP 0032176 A1).

### Summary of the Invention

Considering the many advantageous properties of silica aerogel-based objects, it would be desirable to provide improved variants of the material and corresponding production methods. This task is achieved by the present invention.

According to a first aspect (claim 1), a method of preparing a binder-free bulk silica aerogel material comprises the steps of:
- providing an amount of granular silica aerogel material, and
- carrying out a curing step wherein the granular silica aerogel material is contacted with a curing medium, thereby converting the granular silica aerogel material to the bulk silica aerogel material.

According to the invention, the granular silica aerogel material is hydrophobic and the curing medium is an aqueous curing medium which is either acidic with a pH < 4, preferably with a pH < 3, or basic with a pH > 10, preferably with a pH > 11.

As generally known, an acidic aqueous curing medium with a pH < 3 or pH < 4 can be obtained by adding appropriate amounts of a strong organic or inorganic acid, notably HCl or HNOs, to water. A basic aqueous curing medium with a pH > 10 or pH > 11 can be obtained by adding appropriate amounts of a strong base, e.g., NaOH, to water.

In the present context, the term "granular material" shall be understood as a material made up of individual granules, i.e., a loose arrangement of such granules. In general, such a material will comprise granules of different sizes and shapes. If necessary, the corresponding distributions of granule sizes and/or granule shapes can be characterized by appropriate distribution functions.

In contrast to "granular material", the term "bulk material" shall be understood as a material consisting of one or more extended blocks of material. In the present context, a bulk material can consist of a plurality of granular entities, but in contrast to the case of "granular material", the granular entities in such a bulk material are more or less rigidly connected to neighbouring granular entities and thus form a large, substantially rigid entity. In particular, a bulk material cannot be rearranged in shape by simple shaking.

In the present context, the terms "granular silica aerogel material" and "bulk silica aerogel material" will be used for granular and bulk materials, respectively, made of silica aerogel. Use of the term "silica aerogel material" by itself shall be understood as a generic parent term including both the granular and the bulk types of material.

The term "contacting" in relation to the step of curing shall be understood in the sense of "bringing together and allowing to interact". In the present context it includes, in particular, a step of pouring a fluid reactant into an amount of granular silica aerogel material contained in a suitable reaction vessel.

The term "silica aerogel" as such shall be understood in a broad sense as an aerogel produced starting from a silica gel. In contrast, "hydrophobic silica aerogel" shall refer to an aerogel which by virtue of its production method is hydrophobic. Examples of hydrophobic silica aerogels are those which are produced by subcritical drying using silylation.

Surprisingly, it has been found that starting with a granular silica aerogel material which is hydrophobic and using an aqueous curing medium which is either acidic with a pH < 4 or basic with a pH > 11 allows production of a bulk silica aerogel material with highly advantageous properties. In particular, such material is obtainable without the need to add a binder.

Therefore, according to another aspect of the invention (claim 10), a binder-free bulk silica aerogel material which is obtainable by the above defined method comprises silica aerogel granules which are interface-bonded, the material having the following properties:
- a thermal conductivity below 24 mW/(m·K), preferably below 19 mW/(m·K) and most preferably below 17 mW/(m·K),
- a compressive strength of at least 5 kPa, preferably above 40 kPa,
- a 3-point flexural stress (σ_{f}), determined with a specimen having a longest dimension which is four times the specimen thickness, of at least 0.5 kPa, preferably above 10 kPa, most preferably above 20 kPa.

According to a further aspect (claim 14), the binder-free bulk silica aerogel material as defined above is used as a thermal insulation component or as a filling for cavities. Depending on the application, the bulk silica aerogel material can be provided with a specific shape, as a formed part, or it can be introduced as a filler for cavities in which the curing step is carried out.

Advantageous embodiments are defined in the dependent claims.

According to one embodiment (claim 2), the curing medium further comprises an additive acting to catalyse hydrolysis of alkoxy groups present at the surface of the silica aerogel material. Such a catalyst could be any catalyst known to promote the hydrolysis of silicon alkoxy groups, including fluoride salts including ammonium fluoride, tetramethylammonium fluoride, and tetrabutylammonium fluoride, strong bases including ammonium hydroxide, sodium hydroxide, and potassium hydroxide, or strong acids including hydrochloric acid, nitric acid, sulphuric acid, methanesulfonic acid, and acetic acid.

According to another embodiment (claim 3), the granular silica aerogel material is wetted with a surfactant. The surfactant can be added previous to the curing step or it can be added together with the curing medium, so as to be effective during the curing step. The use of a surfactant increases the wetting of the granules and hence greatly facilitates the mixing and the binding of the mixture. Low amounts of surfactant in the order of 1 to 3 weight-% w.r.t. the aerogel weight are preferable. Possible surfactants are household dish washing liquid, polysorbate 20, polyoxyethylene (2) nonylphenyl ether (Igepal CO-210), polyoxyethylene (100) nonylphenyl ether (Igepal CO-990), dialkyl phosphinic acid (Cyanex 272), polyethylene glycol) methyl ether (PEG 5000) or block copolymers (BASF Pluronic PE9200, BASF Hydropalat WE 3966).

According a further embodiment (claim 4), at least part of the curing step is carried out under compression, whereby the silica aerogel material is compressed from an initial volume to a compressed volume of 30% to 90% of the initial volume. Compressing the mixture during curing reduces air-pockets in the final material, thus leading to a lower thermal conductivity. This makes thermal conductivities below about 17 mW/(m·K) possible.

According to yet another embodiment (claim 5), the curing step is carried out at ambient temperature. By curing at ambient temperature, less energy is needed, which is generally advantageous. However, at ambient temperature the curing times become significantly longer, in the order of several days.

Accordingly, it may be preferable in some embodiments (claim 6) that the curing step be carried out at a temperature of at least 110 °C, preferably of at least 150 °C. Typically, this allows using curing times of about 1.5 hours and 1 hour, respectively. In an advantageous embodiment, the before mentioned temperatures are obtained by carrying out the curing step in a microwave oven (claim 7). For this purpose, a household-sized microwave oven with powers between 350 and 1000 W can be used. It may be advantageous to break up the curing process into two steps, namely, a first curing step with the material placed in a mould, followed by a second curing step with the material outside of the mould.

As generally known, granular silica aerogel material is available with various grain sizes. In many embodiments (claim 8), the silica aerogel material has a grain size distribution ranging from 0.001 mm to 10 mm. According to one embodiment (claim 9), the granular silica aerogel material is a mixture of silica aerogel powder and silica aerogel granules, with a volume fraction of granules to powder that ranges from 55 : 45 to 75 : 25. Using such a mixture of aerogel granules, which will typically have a grain size of 0.5 to 6 mm, and aerogel powder, which will typically have a grain size in the range of 0.001 mm to 0.5 mm, increases the possible volume filling and hence decreases thermal conductivity by avoiding formation of air pockets. Depending on granule and powder particle size, the optimal volume filling is in the ranges from 55 : 45 to 75 : 25 in terms of granules to powder ratio.

A bulk silica aerogel material in the shape of a board can be used as thermal insulation board in various applications, such as internal wall or ceiling insulation, external façade insulation, etc. Typical sizes used in the industry for board lengths and widths are between 400 and 1000 mm and board thickness is typically between 10 and 150 mm. According to one embodiment (claim 11), the silica aerogel material is shaped as a board wherein the board length and the board width each are at least four times the board thickness.

According to a further embodiment (claim 12), the bulk silica aerogel material is configured as a surface laminate comprising at least one reinforcement sheet, the surface laminate having a 3-point flexural stress (σ_{f}) of at least 100 kPa. The use of a surface laminate with such a high tensile strength can strongly improve the flexural strength of the corresponding bulk aerogel material and thus opens additional applications. For this, for example, glass-fibre-based non-wovens with a low surface weight (e.g. 25 g/m³) can be glued on previously formed bulk silica aerogel material. Other possible laminates include polymer or biopolymer non-wovens or woven textiles, polymer foils or carbon fibre based sheet structures.

According to yet another embodiment (claim 13), the bulk silica aerogel material contains a fibrous or particulate reinforcement material. Adding a fibrous or particulate reinforcement material can improve the mechanical properties of the bulk silica aerogel material, for example increasing flexural or compressive strength. Possible additives are glass fibres, polyethylene terephthalate fibres or basalt fibres.

### Detailed description of the invention

### Example 1

2.17 g of aerogel granules produced by Cabot (P300) with a size between 1.2 and 4.0 mm were mixed with 1.27 g of aerogel powder (< 0.1 mm, produced from Cabot P300 by mechanical crushing). Separately, 2.97 g of deionised water were well mixed with 0.74 g of 1-molar hydrochloric acid and 0.06 g of BASF Pluronic PE9200, resulting of a solution pH of about 0.7 to be used as curing medium. All ingredients were merged and mixed with a spatula until a gluey consistency was achieved. The mixture was compressed into a plastic mould of a volume of about 50 x 50 x 10 mm³. It was cured in the mould in a kitchen microwave for 10 minutes at 700 W, subsequently carefully removed from the mould and microwaved at the same power for another 10 minutes. The resulting small insulation board of approximate dimensions of 50 x 50 x 12 mm³ had a thermal conductivity of about 17.3 mW/(m·K), measured with a custom-built guarded hot plate device.

### Example 2

In the same proportions and with the same procedure as in Example 1 except for a lower microwave power of 350 W, a cylindrical sample of diameter 20 mm and height 30 mm was created with a compressive strength at failure of about 24.3 kPa.

### Example 3

With the same amounts and with the same procedure as in Example 1, except using 3.35 g of deionised water and 0.38 g of 1-molar hydrochloric acid, a sample of dimensions 50 x 50 x 12 mm³ was created. The sample was cut along the long direction and a mean 3-point flexural stress (σ_{f}) of 11.9 kPa was measured.

### Example 4

2.16 g of aerogel granules and 1.28 g of aerogel powder were mixed as in Example 1. Separately, 2.70 g of deionised water, 0.06 g of BASF Pluronic PE9200 and 0.32 g of 0.01-molar sodium hydroxide, resulting in a pH of about 11, were well mixed. The curing medium thus formed was merged and mixed with the aerogel as in Example 1 and cured in the same way. The material was bound cohesively and a thermal conductivity of 19.9 mW/(m·K) was measured.

### Example 5

2.15 g of aerogel granules and 1.27 g of aerogel powder were mixed as in Example 1. Separately, 10 g of 1-molar hydrochloric acid was mixed with 10 g of deionised water. The aerogel and acid solution were placed in a suitable plastic container with a valve to apply pressurised air of about 2 bar. The pressure in the container was then gently released. This pressurising process was repeated two more times. Subsequently, the mixture was filtered with a sieve to removed excess liquids and then cured as in Example 1. A thermal conductivity of 17.0 mW/(m·K) was measured.

### Example 6

In the same proportions and with the same procedure as in Example 5, a sample of dimensions 30 x 30 x 30 mm³ was prepared for compression testing. The compressive strength at failure was about 23.6 kPa.

### Example 7

With the same amounts, but using 2.50 g of deionised water and 1.00 g of hydrochloric acid, and with the same mixing procedure as in Example 1, a sample was created. However, instead of curing the sample in the microwave, it was left for seven days at ambient conditions. The measured thermal conductivity of this sample was 16.7 mW/(m·K).

### Example 8

Aerogel granules and powder were mixed as in Example 1. Separately, 3.08 g of deionised water, 0.67 g of 1-molar hydrochloric acid and 0.06 g of BASF Pluronic PE9200 were mixed, then combined with the aerogel and placed in a mould as in Example 1. The sample was subsequently cured in an oven at 130°C for 1.3 h inside the mould and then again for 1.3 h outside the mould.

### Example 9

With the same amounts as in Example 7 and the procedure as in Example 1 a sample was created. The sample was modified by gluing a glass fibre mesh with a surface weight of 25 g/m² on both faces of the sample using a polyurethane glue. A mean 3-point flexural stress (σ_{f}) of 121.0 kPa was measured.

### Example 10

With the same amounts and the same procedure as in Example 1, but with the addition of 0.1 g of glass fibres, a fibre-reinforced sample was created in order to improve mechanical properties.

### Comparative Example 11

With the same material proportions and the same mixing procedure as in Example 1, a mixture was made to fill a cavity in a fired clay brick. The mixture was compressed into the cavity and the brick with the mixture was cured in an oven at 130°C for 8 hours. This resulted in a cohesive filling of the cavity.

### Comparative Example 12

With the same amounts and the same procedure as in Example 1, a mixture was made to loosely fill a mould of about 50 x 50 x 20 mm³ by slightly pressing the material into the mould. Like that no pressure was applied during curing in a microwave as in Example 1. This resulted in a cohesive sample.

### Comparative Example 13

With the same amounts and the same procedure as in Example 1 but substituting hydrochloric acid with water, a mixture with neutral pH was produced. Curing the mix in the microwave as in Example 1 did not result in binding of the granules and hence not in a cohesive sample.

## Claims

1. A method of preparing a binder-free bulk silica aerogel material, comprising the steps of:
- providing an amount of granular silica aerogel material,
- carrying out a curing step wherein the granular silica aerogel material is contacted with a curing medium, thereby converting the granular silica aerogel material to the bulk silica aerogel material,
**characterized in that**
- the granular silica aerogel material is hydrophobic, and
- the curing medium is an aqueous curing medium which is either acidic with a pH < 4, preferably with a pH < 3, or basic with a pH > 10, preferably with a pH > 11.

2. The method according to claim 1, wherein the curing medium further comprises an additive acting to catalyse hydrolysis of alkoxy groups present at the surface of the silica aerogel material.

3. The method according to claim 1 or 2, wherein the granular silica aerogel material is wetted with a surfactant.

4. The method according to one of claims 1 to 3, wherein at least part of the curing step is carried out under compression, whereby the silica aerogel material is compressed from an initial volume to a compressed volume of 30% to 90% of the initial volume.

5. The method according to claim 4, wherein the curing step is carried out at ambient temperature.

6. The method according to one of claims 1 to 4, wherein the curing step is carried out at a temperature of at least 110 °C, preferably of at least 150 °C.

7. The method according to claim 6, wherein the curing step is carried out in a microwave oven.

8. The method according to one of claims 1 to 7, wherein the granular silica aerogel material has a grain size distribution ranging from 0.001 mm to 10 mm.

9. The method according to claim 8, wherein the granular silica aerogel material is a mixture of silica aerogel powder and silica aerogel granules, with a volume fraction of granules to powder that ranges from 55 : 45 to 75 : 25.

10. A binder-free bulk silica aerogel material obtainable by a method according to one of the preceding claims, the material comprising silica aerogel granules which are interface-bonded, the material having the following properties:
- a thermal conductivity below 24 mW/(m·K), preferably below 19 mW/(m·K) and most preferably below 17 mW/(m·K),
- a compressive strength of at least 5 kPa, preferably above 40 kPa,
- a 3-point flexural stress (σ_{f}), determined with a specimen having a longest dimension which is four times the specimen thickness, of at least 0.5 kPa, preferably above 10 kPa, most preferably above 20 kPa.

11. The bulk silica aerogel material according to claim 10, having a board shape with a board length, a board width and a board thickness, wherein the board length and the board width each are at least four times the board thickness.

12. The bulk silica aerogel material according to claim 10 or 11, which is configured as a surface laminate comprising at least one reinforcement sheet, the surface laminate having a 3-point flexural stress (σ_{f}) of at least 100 kPa.

13. The bulk silica aerogel material according to one of claims 10 to 12, further containing a fibrous or particulate reinforcement material.

14. Use of the binder-free bulk silica aerogel material according to one of claims 10 to 13 as a thermal insulation component or as a filling for cavities.
